# EUROPEAN PATENT APPLICATION

(11) **EP 2 096 827 A1**
(43) Date of publication of application: **02.09.2009**
(21) Application number: 08102170.1
(22) Date of filing: 29.02.2008
(51) Int. Cl.: H04L 29/06

(54) **Wireless apparatus and method for configuring access point with wireless terminal**

(71) Applicant: Sercomm Corporation, Nangkang T'ai pei 115 (TW)
(72) Inventor: Lin, Ben, Neihu, Taipei City (TW); Wang, Chao-Fan, Taipei City (TW)
(74) Representative: Rühland, Hans Constantin

(57) **Abstract**

A wireless apparatus and a method for configuring an access point with a wireless terminal are disclosed. The wireless apparatus comprises at least one access point with a SSID and a security key. The SSID has a default value and the security key has a null value. The access point is enabled when the wireless apparatus is in an initial status. The SSID and the security key are respectively set with predetermined values through the wireless terminal when the access point is enabled. When the setting of the SSID and the security key is done, the access point then is disabled.

## Description

### FIELD OF THE INVENTION

The present invention generally relates to a wireless apparatus and method for configuring an access point with a wireless terminal, and more specifically relates to set a SSID (service set identifier) and a security key through the wireless terminal when the wireless apparatus is in an initial status.

### BACKGROUND OF THE INVENTION

As wireless communication technology is in widespread use, more and more electronic apparatuses are equipped with wireless communication elements to achieve wireless communication capability.

To communicate between a wireless apparatus and equipment such as a computer through a wireless network, the computer may use a wireless network card which is compatible with standard PCMICA (Personal Computer Memory Card International Association) to connect the wireless network. Moreover, the wireless network card has an access point, and the wireless apparatus may use another access point, which is for all traffic to go through, to achieve the goal of communicating with the computer through the wireless network, While establishing the network connection, a configuring step must be implemented firstly. For example, a service set identifier (SSID) and a security key, which are a kind of passwords and identifications for communicating between the access point of the wireless network card and the access point of the wireless apparatus, need to be set the same. However, it is so inconvenient for a user to set the SSID and the security key to the access point of the wireless network card, and then the user must set the same SSID and the same security key to the access point of the wireless apparatus.

Besides, it is inconvenient for the user to enable non-PC (personal computer) wireless apparatuses to connect the existing wireless network such as a wireless local area network (WLAN), because there is no keypad and display disposed to the non-PC wireless apparatuses in general.

Therefore, some solutions are currently used to overcome the aforesaid problems in the prior art. The first solution is to configure other interfaces such as a LAN (local area network). But, it must increase additional material cost for the LAN port. A second solution is to ship with default setting for the SSID and the security key of all wireless apparatuses, and then to respectively ship with the same setting for the SSID and the security key of the wireless apparatuses. Consequently, the SSID and the security key must be set once again, and the current connection between the all wireless apparatuses may be disconnected while setting the SSID and the security key. A third solution is that a user respectively presses predetermined buttons on all wireless apparatuses to change the SSID and the security key of the access point based on a predetermined algorithm. Consequently, the user needs to understand the complex procedure of operating these buttons.

To overcome the foregoing shortcomings, the inventor(s) of the present invention based on years of experience in the related field to conduct extensive researches and experiments, and finally invented a wireless apparatus and a method for configuring an access point with a wireless terminal, as a method or a basis for resolving the foregoing drawbacks.

### SUMMARY OF THE INVENTION

Briefly, it is a primary object of the present invention to provide a wireless apparatus and a method for configuring an access point with a wireless terminal so as to have features as the following:
A). The invention can be performed by the embedded system or the like firmware so that there is no need to increase additional cost for the LAN port.
B). The invention can add a new wireless apparatus without disconnecting the current network operations.
C). The invention can immediately set the SSID and the security key of a new access point once only. There is no need to thoroughly ship with the default setting and the same setting once again for the SSID and the security key of the wireless apparatuses.
D). The invention can be set through a wireless terminal so that the user does not need to respectively press the predetermined buttons on all wireless apparatuses to change the SSID and the security key of the access point based on a predetermined algorithm.
E). The invention is able to make the access point to be detected by the wireless terminal which is going to configure and use the wireless apparatus.

To achieve the foregoing object, the wireless apparatus comprises at least one access point having a SSID and a security key. The access point is enabled when the wireless apparatus is in an initial status. The SSID has a default value and the security key has a null value. The SSID and the security key are respectively set with predetermined values through the wireless terminal when the access point is enabled. When the setting of the SSID and the security key is done, the access point then is disabled.

To achieve the foregoing object of the invention, the method comprises the following steps:
a). Providing at least one access point with a service set identifier (SSID) and a security key in a wireless apparatus;
b). Providing a default value and a null value to the SSID and the security key respectively;
c). Enabling the access point when the wireless apparatus is in an initial status;
d). Setting predetermined values to the SSID and the security key respectively through the wireless terminal; and
e). Disabling the access point.

To make it easier for our examiner to understand the object of the invention, its innovative features and performance, a detailed description and technical characteristics of the present invention are described together with the drawings as follows.

### BRIEF DESCRIPTION OF THE DRAWINGS

FIG. 1 is a schematic diagram of a wireless apparatus for configuring an access point with a wireless terminal of the invention;
FIG. 2 is a flowchart of a method for configuring an access point with a wireless terminal of the invention;
FIG. 3 is a flowchart illustrating a camera configured to wirelessly communicate with a notebook computer according to an embodiment of the invention; and
FIG. 4 is a screen shot of a setting dialog box according to an embodiment of the present invention.

### DETAILED DESCRIPTION OF THE PREFERRED EMBODIMENTS

Referring to the related figures for the wireless apparatus and method for configuring an access point with a wireless terminal according to a preferred embodiment of the present invention, wherein the same elements are described by the same reference numerals.

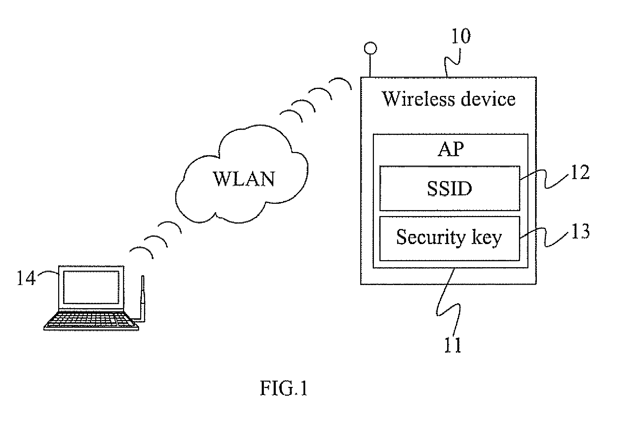

Referring to FIG. 1 for the schematic diagram of a wireless apparatus 10 for configuring an access point 11 with a wireless terminal 14 of the invention is illustrated. The wireless apparatus 10 comprises at least one access point 11, a SSID 12 and a security key 13. The access point 11 is contained in the wireless apparatus 10. The SSID 12 and the security key 13 are contained in the access point 11. When the wireless apparatus 10 is in an initial status, the access point 11 is enabled. The SSID 12 has a default value and the security key 13 has a null value. The SSID 12 and the security key 13 then are respectively set with predetermined values through the wireless terminal 14. After the SSID 12 and the security key 13 are set completely, the access point 11 then is disabled.

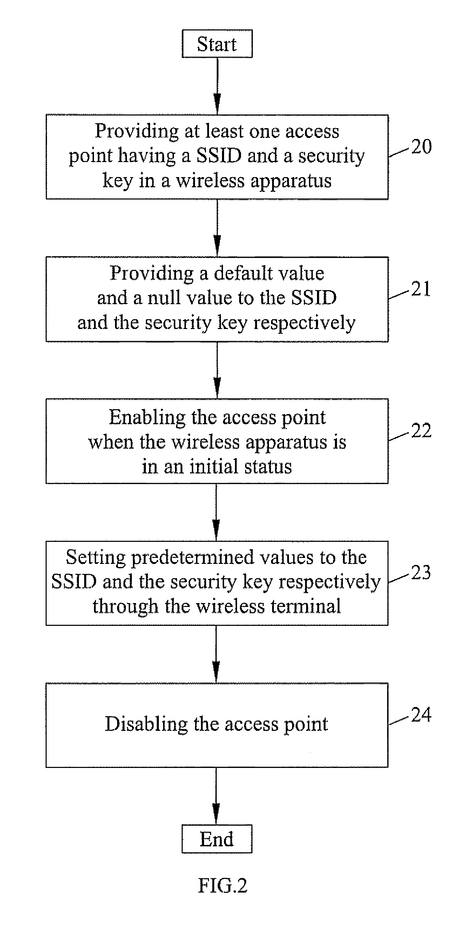

Referring to FIG. 2 for the flowchart of a method for configuring an access point with a wireless terminal of the invention is illustrated. The method comprising the following steps of:
- Step 20:: Providing at least one access point having a SSID and a security key in a wireless apparatus;
- Step 21:: Providing a default value and a null value to the SSID and the security key respectively;
- Step 22:: Enabling the access point when the wireless apparatus is in an initial status;
- Step 23:: Setting predetermined values to the SSID and the security key respectively through the wireless terminal; and
- Step 24:: Disabling the access point.

The wireless apparatus is preferably a client device that can be a computer, a camera or other electronic apparatuses with wireless communication capabilities. The wireless terminal is preferably a desktop or a laptop computer, a personal digital assistant (PDA), a mobile phone or other electronic apparatuses with wireless communication capabilities. The access point of the wireless apparatus is preferably an embedded system module or firmware applied to a wireless local area network (WLAN) from 2.4 GHz to 5GHz (gigahertz) frequency band. The embedded system module is further wired to an Ethernet network to transmit signals. The WLAN is conformed to an IEEE (Institute of Electrical and Electronic Engineers) 802.11 standard or other wireless communication protocols. The access point can be composed of an embedded firmware, software or a chip. The default value of the SSID is preferably a predetermined content before implementing the setting procedure, and the SSID is preferably composed of up to 32 letters or numbers to form a sequence. The security key has a null value, and is preferably a WEP (wired equivalency privacy) key, a WPA (Wi-Fi protected access) key or other data encryption standard.

For more detail illustration, the configuration for the wireless apparatus to wirelessly communicate with a wireless terminal is shown as the following.

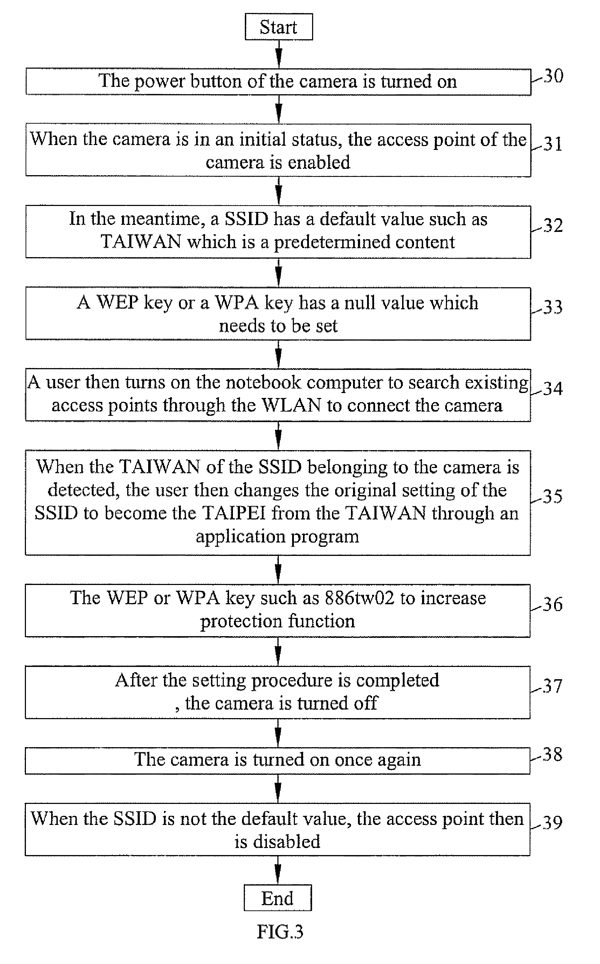

Referring to FIG. 3 for a flowchart illustrates a camera configured to wirelessly communicate with a notebook computer according to an embodiment of the invention. The camera also has wireless communication capability and at least one access point. The power button of the camera is turned on (step 30). When the camera is in an initial status, the access point of the camera is enabled (step 31). In the meantime, a SSID has a default value such as TAIWAN which is a predetermined content (step 32), and a WEP key or a WPA key has a null value which needs to be set (step 33). A user then turns on the notebook computer to search existing access points through the WLAN to connect the camera (step 34). When the TAIWAN of the SSID belonging to the camera is detected, the user then changes the original setting of the SSID to become the TAIPEI from the TAIWAN through an application program (step 35). Meanwhile, the user also sets the WEP or WPA key such as 886tw02 to increase protection function (step 36). After the setting procedure is completed, the camera is turned off (step 37). The camera is turned on once again (step 38). When the SSID is not the default value, the access point then is disabled (step 39),

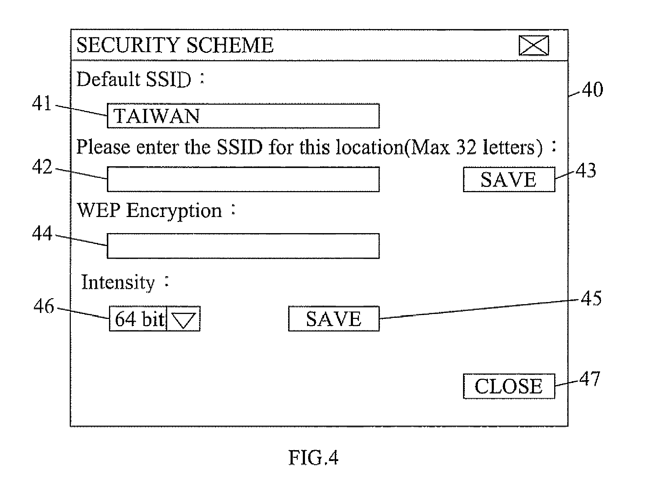

Referring to FIG. 4 shows a dialog box 40 that appears on the display of the wireless terminal 14 as shown in FIG. 1 after the user found the access point of the wireless apparatus 10. The name of the SSID 41 shown in the dialog box 40 is TAIWAN that is a default value. The user then inputs TAIPEI in box 42 to replace the TAIWAN through the input interface of the wireless terminal 24 and then pushes the Save button 43. Afterward, the user further sets the security key as the WEP key by inputting 886tw in box 44 to increase the protection scheme. It should be noted that herein the embodiment can be the WPA key which is a powerful data encryption specification utilizing Temporal Key Integrity Protocol (TKIP) by utilizing dynamic keys. Intensity supported is specified in box 46 and herein 64bit is selected. The user then pushes the Save button 45 to complete the input of the box 44. Finally, the entire setting process is finished after pushing the Close button 47.

While the invention has been described by way of example and in terms of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. A wireless apparatus for configuring an access point with a wireless terminal, the wireless apparatus comprising:
- at least one access point;
- a SSID having a default value; and
- a security key having a null value,
- wherein the SSID and the security key are contained in the access point, and the access point is enabled when the wireless apparatus is in an initial status, and the SSID and the security key are respectively set with predetermined values through the wireless terminal when the access point is enabled, and after the SSID and the security key are set completely, the access point is disabled.

2. The wireless apparatus of claim 1, wherein the wireless apparatus is a client apparatus that further includes a computer, a camera or other apparatuses with wireless communication capabilities.

3. The wireless apparatus of claim 1, wherein the wireless terminal is a desktop computer, a laptop computer, a personal digital assistant (PDA), a mobile phone or other electronic apparatuses with wireless communication capabilities.

4. The wireless apparatus of claim 1, wherein the access point of the wireless apparatus is an embedded system module or firmware applied to a wireless local area network (WLAN) from 2.4 GHz to 5GHz frequency band.

5. The wireless apparatus of claim 4, wherein the embedded system module is further wired to an Ethernet network to transmit signals.

6. The wireless apparatus of claim 1, wherein the access point is composed of an embedded firmware, software or a chip.

7. The wireless apparatus of claim 1, wherein the SSID is composed of up to 32 letters or numbers to form a sequence.

8. The wireless apparatus of claim 1, wherein default value is a predetermined content before implementing the setting procedure.

9. The wireless apparatus of claim 1, wherein the security key is a WEP (wired equivalency privacy) key, a WPA (Wi-Fi protected access) key or other data encryption standard.

10. A method for configuring an access point with a wireless terminal, the method comprising:
- providing at least one access point having a service set identifier (SSID) and a security key in a wireless apparatus;
- providing a default value and a null value to the SSID and the security key respectively;
- enabling the access point when the wireless apparatus is in an initial status; setting predetermined values to the SSID and the security key respectively through the wireless terminal; and
- disabling the access point.
